# EUROPÄISCHE PATENTSCHRIFT

(11) **EP 4 619 705 B1**
(45) Veröffentlichungstag und Bekanntmachung des Hinweises auf die Patenterteilung: **04.11.2026**
(21) Anmeldenummer: 23768126.7
(22) Anmeldetag: 04.09.2023
(51) Int. Cl.: G01B 11/245

(54) **VERFAHREN ZUR MESSUNG DER ABWEICHUNGEN EINER LÄNGSACHSE EINES PROFILS VON EINEM GERADEN SOLLVERLAUF**
METHOD FOR MEASURING THE DEVIATIONS OF A LONGITUDINAL AXIS OF A PROFILE FROM A STRAIGHT TARGET COURSE
PROCÉDÉ DE MESURE DES ÉCARTS D'UN AXE LONGITUDINAL D'UN PROFIL À PARTIR D'UNE TRAJECTOIRE CIBLE DROITE

(30) Priorität: 14.11.2022 AT 508602022
(43) Veröffentlichungstag der Anmeldung: 24.09.2025
(73) Patentinhaber: MOST Technik GmbH, 4817 St. Konrad (AT)
(72) Erfinder: MOSER, Friedrich, 4644 Scharnstein (AT)
(74) Vertreter: Hübscher & Partner Patentanwälte GmbH
(86) Internationale Anmeldenummer: PCT/AT2023/060308
(87) Internationale Veröffentlichungsnummer: WO 2024/103086

(56) Entgegenhaltungen:
- EP-A2- 3 093 611
- WO-A1-2006/138220
- WO-A1-2019/082134
- JP-A- 2019 211 348
- JP-A- S6 171 307

## Beschreibung

### Technisches Gebiet

Die Erfindung bezieht sich auf ein Verfahren zur Messung der Abweichungen einer Längsachse eines Profils von einem geraden Sollverlauf mit einem das Profil aufnehmenden Gestell und einer im Gestell vorgesehenen Messeinrichtung zur Lagekoordinatenerfassung von Umrisspunkten des Profils, wobei aus den Lagekoordinaten von gegeneinander winkelversetzten Umrisspunkten einzelner über die Profillänge verteilter Querschnittsflächen die Abweichungen des Istverlaufs der Längsachse des Profils von einem geraden Sollverlauf in einer Auswerteeinrichtung ermittelt werden.

### Stand der Technik

Um einerseits den Querschnitt und anderseits eine Abweichung des Längsachsenverlaufs von einem geraden Sollverlauf eines Profils zu erfassen, ist es bekannt (DE 44 44 787 A1), das Profil in einer Aufnahme eines Gestells, beispielsweise auf einem Querförderer, grob ausgerichtet abzustützen und mithilfe einer Messeinrichtung zu vermessen, die im Gestell parallel zur Profillängsachse geführt ist und wenigstens einen Messkopf aufweist, der durch einen Kreuzschlitten oder einen Knickarm in einer zur Längsführung der Messeinrichtung senkrechten Ebene verlagerbar ist. Mit den Messdaten des die Stirnseite des Profils abtastenden Messerkopfs kann in einer Auswerteeinrichtung der Profilquerschnitt erfasst und aus dem Profilquerschnitt der Mittelpunkt der Querschnittsfläche errechnet werden, um dann bei aufeinanderfolgenden Messdurchläufen, bei denen die Messeinrichtung entlang des Profils verfahren wird, einerseits den horizontalen Abstand des Profils von der Bewegungsbahn des Messkopfs und anderseits den Höhenabstand zu messen, sodass aus diesen auf die Profillänge bezogenen Messdaten der Verlauf der Profillängsachse ermittelt werden kann, und zwar in einem dreidimensionalen Koordinatensystem mit den Lagekoordinaten in horizontaler und vertikaler Richtung sowie in Richtung der Profillängsachse. Nachteilig ist allerdings, dass der Profilquerschnitt ermittelt werden muss und dass die durch die Profilabstützung auf einer Gestellauflage bedingten Profilverformungen nicht erfasst werden.

Um die durch eine Auflage bedingten Verformungen eines Profils zu berücksichtigen, ist es darüber hinaus bekannt (WO 2019/082134 A1), das zu überprüfende Profil auf mehreren Auflagern ortsfest abzustützen und die entweder nur durch das Eigengewicht oder eine äußere Zusatzkraft auftretenden Lagerkräfte zu messen, sodass aufgrund vorgebbarer mechanischer Werkstoffeigenschaften, insbesondere des Elastizitätsmoduls, und dem Profilquerschnitt die auflagebedingten Verformungen des Profils über die Profillänge berechnet und bei der Ermittlung der Abweichungen des Istverlaufs des Profils vom Sollverlauf berücksichtigt werden können. Abgesehen davon, dass der Profilquerschnitt aufwendig durch eine Erfassung mehrerer gegeneinander winkelversetzter Umrisspunkte in mehreren über die Profillänge verteilten Querschnittsflächen ermittelt wird, und zwar durch eine Messeinrichtung mit entsprechenden Messköpfen, die bevorzugt nacheinander entlang des Profils von Messebene zu Messebene bewegt werden, muss der Sollverlauf des Profils mit dem Nachteil aufwendig berechnet werden, dass sich über die Länge des Profils ändernde Werkstoffeigenschaften unberücksichtigt bleiben müssen.

Bei einer anderen bekannten Messeinrichtung (EP 3 093 611 A2), bei der die Querschnittslage eines Profils in mehreren über die Profillänge verteilten Messebenen anhand von einer Mehrzahl von Umrisspunkten in den einzelnen Messebenen erfasst und aus den daraus errechneten Koordinaten der Querschnittmittelpunkte der Istverlauf der Profilachse errechnet wird, wird das Profil zur Berücksichtigung der schwerkraftbedingten Verformungen auf drehbar gelagerten Wippen abgestützt, die einen Ausgleich der Auflagerkräfte je Wippe ermöglichen, schwerkraftbedingte Profilbiegungen zwischen den Auflagestellen aber unberücksichtigt lassen.

Um den geraden Verlauf eines Walzprofils zu überprüfen, ist es schließlich bekannt (WO 2006/138220 A1), dem letzten Walzenpaar ein Messsystem nachzuordnen, das wenigstens drei an eine Auswerteeinheit angeschlossene, mit gegenseitigem Abstand in Profillängsrichtung angeordnete Bildgebungsmodule aufweist, die jeweils Umrisspunkte des Walzprofils in einer einen Profilquerschnitt enthaltenden Messebene erfassen, um anhand der auf ein Koordinatensystem bezogenen Koordinaten dieser Umrisspunkte und dem Profilquerschnitt die Koordinaten des Querschnittsschwerpunkts in der jeweiligen Messebene zu berechnen. Werden die Schwerpunkte der ein- und ausgangsseitigen Messebenen des Messsystems durch eine Bezugsgerade miteinander verbunden, so kann der Unterschied zwischen den Schwerpunktkoordinaten in den dazwischenliegenden Messebenen und den Koordinaten der Schnittpunkte der Bezugsgeraden mit der jeweiligen Messebene als Maß für die Abweichung des Walzprofils von einem geraden Sollverlauf zwischen den ein- und ausgangsseitigen Messebenen gewertet werden. Nachteilig ist allerdings, dass schwerkraftbedingte Verformungen nicht erfasst werden können.

Weiterer relevanter Stand der Technik wird zudem durch JP S61-71307 A und JP 2019-211348 A gebildet.

### Darstellung der Erfindung

Der Erfindung liegt somit die Aufgabe zugrunde, ein Messverfahren anzugeben, mit dessen Hilfe die Abweichungen einer Längsachse eines Profils von einem geraden Sollverlauf rasch mit hoher Genauigkeit ermittelt werden können, und zwar ohne Kenntnis des Profilquerschnitts und der mechanischen Werkstoffeigenschaften.

Ausgehend von einem Verfahren der eingangs geschilderten Art löst die Erfindung die gestellte Aufgabe dadurch, dass zunächst eine durch zwei einander entsprechende, in voneinander beabstandeten Querschnittsflächen liegende Umrisspunkte gehende Bezugsgerade festgelegt wird, wobei sich in den einzelnen Querschnittsflächen Bezugspunkte als Schnittpunkte der Bezugsgeraden mit der jeweiligen Querschnittsfläche ergeben, dass dann in einem Messdurchgang die Lagekoordinaten der auf einer gemeinsamen Profilerzeugenden liegenden Umrisspunkte in den einzelnen Querschnittsflächen erfasst werden, bevor der Messdurchgang nach einer Drehverstellung des Profils wiederholt wird, das in zwei drehverstellbaren Aufnahmen drehfest, aber momentfrei gelagert ist, und dass in der Auswerteeinrichtung aus den auf die Bezugspunkte bezogenen Lagekoordinaten der in wenigstens zwei Drehstellungen des Profils erfassten Umrisspunkte die Abweichungen von einem geraden Sollverlauf des Profils ermittelt werden.

Die Erfindung geht von der Erkenntnis aus, dass eine Bezugsgerade durch zwei einander in zwei voneinander in einem gegenseitigen Abstand angeordneten Querschnittsflächen entsprechende Umrisspunkte des Profils parallel zum geraden Sollverlauf der Längsachse des unbelasteten, momentfreien Profils verläuft. Aus den auf diese Bezugsgerade bezogenen Lagekoordinaten von Umrisspunkten, die auf einer gemeinsamen Profilerzeugenden, also auf einer Verbindungslinie der einander entsprechenden Umrisspunkte aufeinanderfolgender Querschnittsflächen, liegen, lässt sich somit in einer vorgegebenen Drehstellung des Profils die Abweichung des Verlaufs der Profilerzeugenden von einem geraden, zur Bezugslinie parallelen Sollverlauf dieser Profilerzeugenden in einzelnen Querschnittsflächen bestimmen. Da das Profil in zwei drehverstellbaren Aufnahmen drehfest, aber momentfrei gelagert ist, wird das Profil in der jeweiligen Drehstellung lediglich durch das Gewichtsmoment belastet, sodass die gemessene Abweichung der Profilerzeugenden vom geraden Sollverlauf einerseits von der geometrischen Abweichung des Istverlaufs des unbelasteten Profils vom Sollverlauf und anderseits vom gewichtsbedingten Biegeverlauf des in zwei Aufnahmen momentfrei gehaltenen Profils abhängt. Aufgrund des Umstands, dass zumindest zwei Messdurchgänge in unterschiedlichen Drehstellungen des Profils vorgesehen sind, in denen jeweils der Istverlauf einer Profilerzeugenden anhand der Lagekoordinaten einander entsprechender Umrisspunkte in mehreren Querschnittsflächen erfasst wird, können aus den in unterschiedlichen Drehstellungen des Profils erfassten Lagekoordinaten der jeweils auf einer Profilerzeugenden liegenden Umrisspunkte die durch die Gewichtsbelastung bedingten Abweichungen eliminiert werden, sodass aus den in unterschiedlichen Drehstellungen des Profils erfassten Lagekoordinaten der Umrisspunkte die Abweichung der Längsachse des nicht mit einem Gewichtsmoment beaufschlagten, unbelasteten Profils vom geraden Sollverlauf in der jeweiligen Querschnittsfläche ermittelt werden kann, und zwar ohne Kenntnis des Profilquerschnitts und der elastischen Eigenschaften des Profils.

Die Berücksichtigung der durch das Gewichtsmoment bedingten elastischen Biegung eines Profils ist für Profilquerschnitte vergleichsweise einfach, deren Flächenträgheitsmomente um die Hauptachsen gleich sind, weil sich zufolge dieses Umstands alle Umrisspunkte der Querschnittsflächen bei einer Profildrehung auf Kreisbahnen bewegen. Geringfügige Unterschiede der Hauptträgheitsmomente können trotz der geforderten Messgenauigkeit wegen des vergleichsweise kleinen Einflusses auf die Abweichungen der Umlaufbahn der Umrisspunkte von der Kreisform vernachlässigt werden.

Weist der Profilquerschnitt unterschiedliche Hauptträgheitsmomente auf, sind die bezüglich unterschiedlicher Achsen unterschiedlichen Flächenträgheitsmomente zu berücksichtigen. Durch Vorgabe des Verhältnisses der Flächenträgheitsmomente in Bezug auf die Hauptachsen des Profilquerschnitts kann die bei einer Profildrehung aufgrund der richtungsabhängig unterschiedlichen Flächenträgheitsmomente von der Kreisbahn abweichende Form der Bahn der Umrisspunkte bestimmt und der Berechnung der Abweichung der Längsachse des biegemomentfreien Profils vom geraden Sollverlauf zugrunde gelegt werden. Eine solche vorgangsweise ist jedoch nicht notwendig, wenn für die Messungen bei aufeinander abgestimmten Drehwinkeln vorgenommen werden. Dies gilt insbesondere für die Erfassung der Lagekoordinaten der Umrisspunkte in zwei um 180° gegeneinander winkelversetzten Drehlagen des Profils, weil in diesen Drehlagen die gewichtsbedingte Durchbiegung des Profils übereinstimmt und daher unberücksichtigt bleiben kann. Können die Lagekoordinaten der Umrisspunkte nach einer Drehung des Profils um 180° nicht erfasst werden, weil sich diese Umrisspunkte bei einer solchen Drehung des Profils aus dem Erfassungsbereich der eingesetzten Messeinrichtung bewegen, so können die Lagekoordinaten der Umrisspunkte auch in drei sich jeweils um 45° unterscheidenden Drehlagen des Profils erfasst werden, was allerdings eine zusätzliche Messreihe bedingt.

Die Lagekoordinaten von Umrisspunkten in bestimmten Querschnittsflächen können durch entlang des Profils verteilte Messköpfe erfasst werden. Einfachere Konstruktionsverhältnisse ergeben sich allerdings, wenn die Messeinrichtung wenigstens einen entlang des Profils verlagerbaren Messkopf aufweist, der je Messdurchgang von Querschnittsfläche zu Querschnittsfläche verfahren wird und nacheinander die Lagekoordinaten der einander entsprechenden Umrisspunkte in den einzelnen Querschnittsflächen erfasst.

### Kurze Beschreibung der Erfindung

Anhand der Zeichnung wird das erfindungsgemäße Verfahren näher erläutert. Es zeigen
- Fig. 1: eine Vorrichtung zur Durchführung des erfindungsgemäßen Verfahrens in einem vereinfachten Schaubild,
- Fig. 2: den Verlauf eines momentfrei in zwei Aufnahmen gelagerten Profils mit einem kreisrunden Querschnitt in einer Drehstellung in einem schematischen Schaubild,
- Fig. 3: den Verlauf des Profils von Fig. 2 anhand der in der Fig. 2 eingezeichneten Querschnitte in einer stirnseitigen Ansicht in einem größeren Maßstab,
- Fig. 4: eine der Fig. 2 entsprechende Darstellung des um 90° gedrehten Profils und
- Fig. 5: den Verlauf des Profils in der Drehstellung nach der Fig. 4 in einer der Fig. 3 entsprechenden Darstellung.

### Wege zur Ausführung der Erfindung

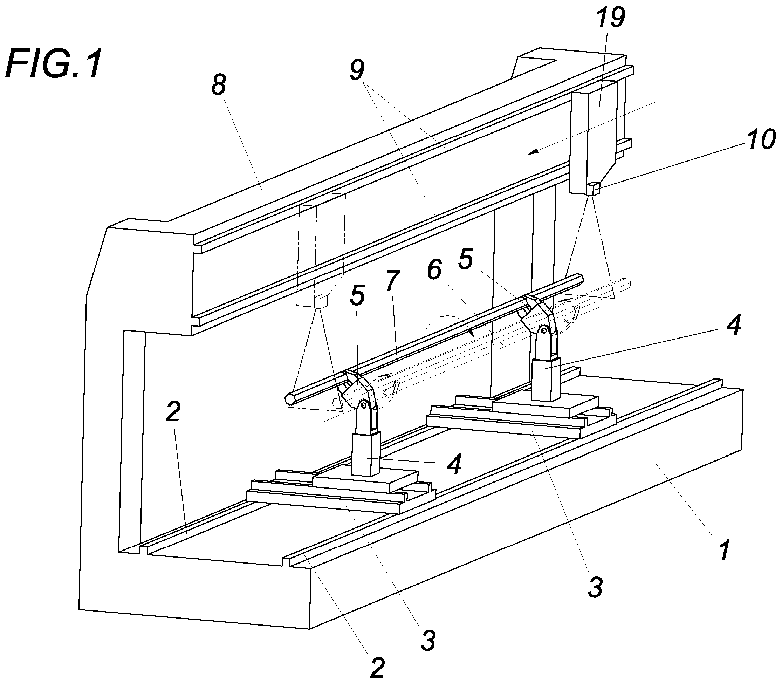

Die Vorrichtung gemäß der Fig. 1 weist ein Gestell 1 mit zwei auf Führungsschienen 2 verfahrbaren Schlitten 3 auf, auf denen höhenverstellbare Träger 4 für je eine Aufnahme 5 gelagert sind. In diesen um eine gemeinsame, zu den Führungsschienen 2 parallele Achse 6 drehverstellbaren Aufnahmen 5 ist das jeweils zu vermessende Profil 7 drehfest, aber momentfrei gelagert, sodass das Profil 7 lediglich durch das Eigengewicht belastet wird und sich daher aufgrund seiner elastischen Eigenschaften unter Vermeidung jeglicher Einspannmomente ausschließlich gewichtsbedingt zwischen den Aufnahmen 5 durchbiegt.

Das Gestell 1 ist oberhalb der Führungsschienen 2 mit einem Längsträger 8 versehen, der eine zu den Führungsschienen 2 parallele Führung 9 für wenigstens einen Messkopf 10 bildet, der somit entlang des in den Aufnahmen 5 gehaltenen Profils 7 verlagerbar ist, um die Lagekoordinaten von einander in einzelnen Querschnittsflächen entsprechenden Umrisspunkten des Profils 7 zu erfassen. Zu diesem Zweck kann der Messkopf 10 auch vorteilhaft entlang von die Querschnittsflächen aufspannenden Koordinatenachsen verlagert werden, was jedoch aus Übersichtlichkeitsgründen nicht dargestellt ist.

Die einander entsprechenden Umrisspunkte liegen jeweils auf einer Profilerzeugenden, und können insbesondere dann einfach vermessen werden, wenn die Profilerzeugende durch eine Längskante des Profils 7 oder durch den Verlauf der Profilkonturen in zwei unterschiedlichen Messrichtungen, beispielsweise in vertikaler und horizontaler Richtung, bestimmt werden, wie dies im Folgenden näher erklärt wird.

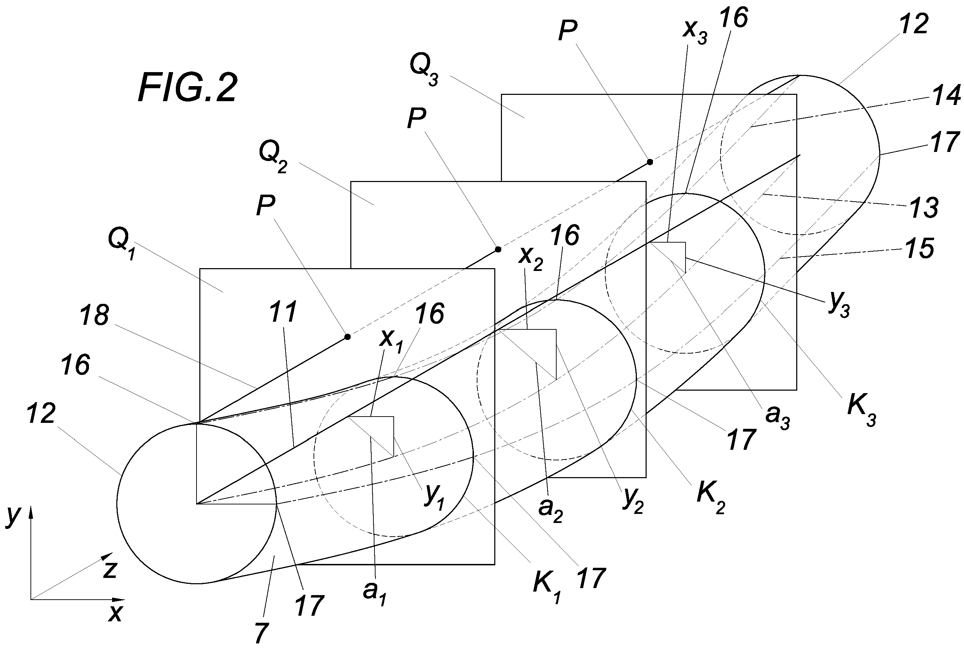

**In** der Fig. 2 ist ein Profil 7 der Einfachheit halber mit einem Kreisquerschnitt in einem vom geraden Sollverlauf abweichenden Verlauf dargestellt, wie er sich in der gezeichneten Drehstellung bei einer momentfreien Lagerung in den beiden Aufnahmen 5 aufgrund der geometrischen Abweichung vom Sollverlauf und zufolge der gewichtsbedingten Durchbiegung ergibt. Der belastungsfreie, geometrische Sollverlauf 11 des Profils 7 ergibt sich durch eine Gerade, die die Mittelpunkte der beiden Stirnkreise 12 des Profils 7 verbindet. Der durch eine strichpunktierte Linie angedeutete Istverlauf 13 der Profilachse weicht zum besseren Verständnis in übertriebener Art vom Sollverlauf 11 ab. Aus Anschauungsgründen wird diese Abweichung in Querschnittsflächen Q₁, Q₂ und Q₃ anhand eines kartesischen Koordinatensystem x, y, z gezeigt. Demnach bestimmt sich die Abweichung a₁ des Istverlaufs 13 vom Sollverlauf 11 in der Querschnittsfläche Q₁ durch die Koordinaten x₁ und y₁. In den beiden anderen Querschnittsflächen Q₂ und Q₃ ergeben sich die Abweichungen a₂ und a₃ analog durch die Koordinaten x₂, y₂ und x₃, y₃.

Da die Lagekoordinaten xᵢ, yᵢ der Mittelpunkte der Querschnittskreise Kᵢ nicht unmittelbar erfasst werden können, werden die Lagekoordinaten von Umrisspunkten des Profils 7 entlang einer Profilerzeugenden mithilfe des Messkopfes 10 bestimmt. Als Profilerzeugende wird dabei eine Verbindungslinie der einander entsprechenden Umrisspunkte aufeinanderfolgender Profilquerschnitte verstanden. Solche Profilerzeugenden können vorteilhaft durch messtechnisch einfach erfassbare Profilkanten, durch einen Abstandsverlauf einer Profilfläche oder dem Verlauf einer Profilkontur vorgegeben werden. Gemäß den Fig. 2 bis 5 werden als Profilerzeugende beispielhaft die sich in Blickrichtung der Koordinatenachsen x und y ergebenden Konturverläufe herangezogen. Demnach ergibt sich eine strichpunktiert angedeutete Profilerzeugende 14 als Profilkontur in Blickrichtung der x-Achse zur Erfassung der Lagekoordinaten in y-Richtung und eine Profilerzeugende 15 als Profilkontur in Blickrichtung der y-Achse zur Erfassung der Lagekoordinaten in x-Richtung. Da weitgehend von einem torsionsfreien Profil 7 ausgegangen werden kann, bedeutet dies, dass die Profilerzeugende 14 die einander entsprechenden Umrisspunkte 16 verbindet, die auf einem zur y-Achse parallelen Radius des jeweiligen Kreisquerschnitts liegen, während die Profilerzeugende 15 die durch einen zur x-Achse parallelen Radius bestimmten Umrisspunkte 17 der einzelnen Kreisquerschnitte Kᵢ verbindet, wobei die beiden Profilerzeugenden 14, 15 zueinander und zum Istverlauf 13 der Profillängsachse parallel verlaufen.

Für die Bestimmung des Istverlaufs 13 der Profillängsachse wird eine Bezugsgerade 18 vorgegeben. Diese Bezugsgerade 18 verbindet zwei einander entsprechende Umrisspunkte des Profils 7 in zwei mit Abstand voneinander verlaufenden Querschnittsflächen. Im dargestellten Ausführungsbeispiel werden der Einfachheit halber die Umrisspunkte 16 der beiden Stirnkreise 12 zur Bestimmung der Bezugsgeraden 18 herangezogen, die dem geraden Sollverlauf der durch diese Umrisspunkte gehenden Profilerzeugenden entspricht und damit parallel zum Sollverlauf 11 der Profillängsachse verläuft. Mit der Festlegung einer Bezugsgeraden 18 ergeben sich in den einzelnen Querschnittsflächen Qᵢ Bezugspunkte P als Schnittpunkte der Bezugsgeraden 18 mit der jeweiligen Querschnittsfläche Qᵢ, sodass die Lagekoordinaten der Umrisspunkte 16, 17 bezüglich der x- und y-Achse auf diese Bezugspunkte P bezogen werden können.

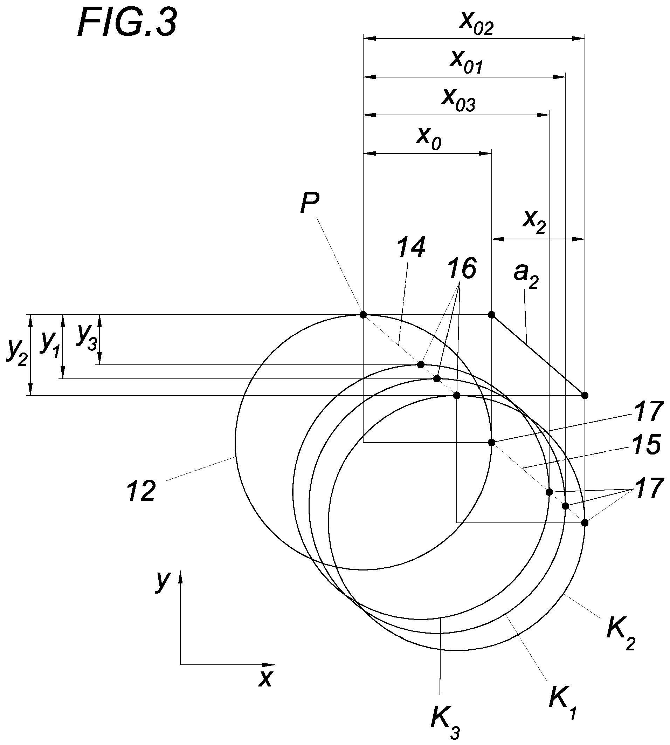

Dies bedeutet beispielsweise gemäß der Fig. 3 für den Umrisspunkt 16 des Kreisquerschnitts K₂ einen auf den Bezugspunkt P bezogenen Abstand x₀₂ in x-Richtung und einen Abstand y₂ in y-Richtung. Da zum Unterschied zum Umrisspunktpunkt 16, der im Stirnkreis 12 mit dem Bezugspunkt P zusammenfällt, der Umrisspunkt 17 des Stirnkreises 12 einen Abstand x₀ zum Bezugspunkt P aufweist, muss dieser Abstand bei der Bestimmung des Lageunterschieds der einander entsprechenden Umrisspunkte 17 des Stirnkreises 12 und des Kreisquerschnitts K₂ berücksichtigt werden, indem für den Abstand x₂ der Umrisspunkte 17 des Stirnkreises 12 und des Kreisquerschnitts K₂ die Differenz der Lagekoordinaten gebildet wird, sodass gilt x₂ = x₀₂ - x₀. Der durch die Koordinaten x₂, y₂ definierte Abstand a₂ entspricht somit der Abweichung des Istverlaufs 13 der Profilachse vom geraden Sollverlauf 11 in der Querschnittsfläche Q₂. Analog dazu geben die Koordinaten x₁ = x₀₁ - x₀, y₁ die Lageabweichung a₁ und die Lagekoordinaten x₃ = x₀₃ - x₀, y₃ die Lageabweichung a₃ des Istverlaufs 13 der Profilachse vom Sollverlauf 11 in den Querschnittsflächen Q₁ und Q₃ an.

Die Koordinaten des Bezugspunktes P sowie der Umrisspunkte 16, 17 in den einzelnen Querschnittsflächen werden mithilfe des Messkopfs 10 einer Messeinrichtung erfasst, sodass durch die Messeinrichtung Lagekoordinaten erfasst werden, die sich nicht auf die Bezugsgerade 18, sondern auf die Lage des Messkopfs 10 gegenüber dem Profil 7 in der jeweiligen Querschnittsfläche beziehen. Aus der Differenz der durch den Messkopf 10 einerseits für die Bezugslinie 18 und anderseits für die Umrisspunkte 16, 17 erfassten Lagekoordinaten in x- und y-Richtung ergeben sich die Koordinaten xi, yi in der Querschnitssfläche Qi, wobei sich Fehler im Bahnverlauf des Messkopfs 10 aufgrund der Differenzbildung aufheben.

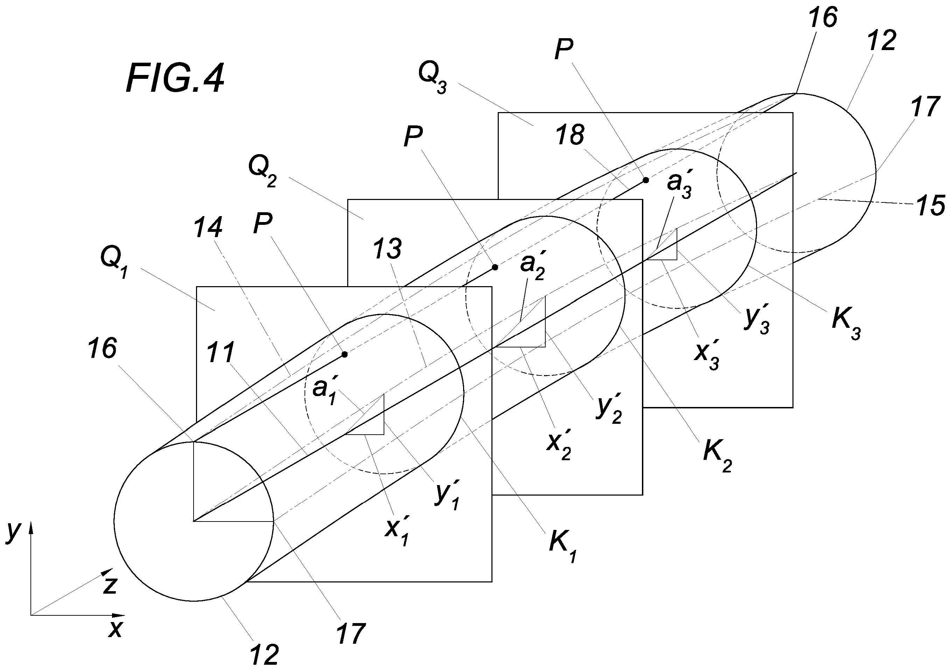

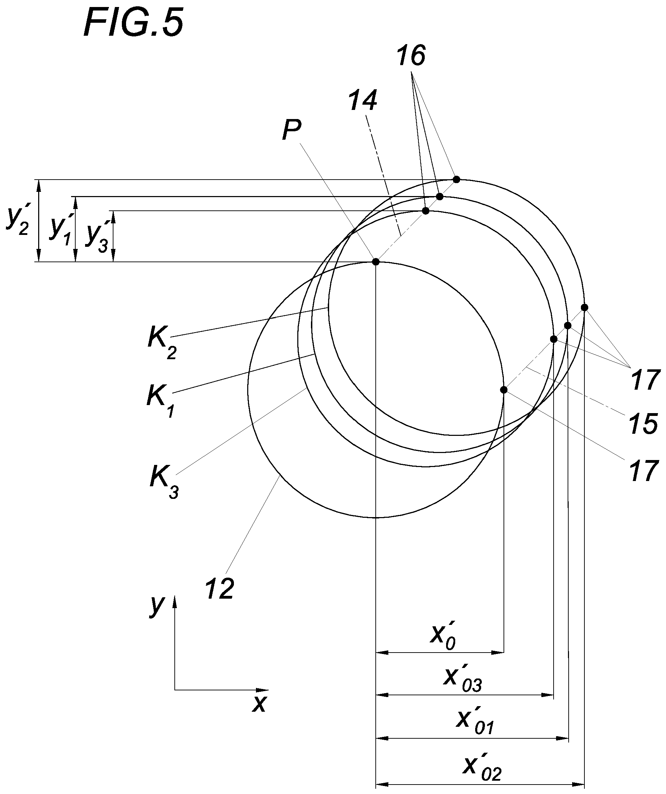

Nach der Erfassung des Istverlaufs 13 der Profillängsachse in Bezug auf einen geraden Sollverlauf 11 in einer Drehstellung des Profils 7 wird das Profil 7 um einen Winkelschritt bezüglich seiner Längsachse gedreht, um den beschriebenen Messdurchgang in der neuen Drehstellung des Profils 7 zu wiederholen. In den Fig. 4 und 5 ist das Profil 7 aus der Fig. 2 um 90° gedreht dargestellt. Die Verlagerungen der Querschnittskreise K₁, K₂ und K₃ in den Querschnittsflächen Q₁, Q₂ und Q₃ ergeben sich einerseits aufgrund der Abweichung der Profillängsachse vom geraden Sollverlauf und anderseits durch das gewichtsbedingte Biegemoment.

Entsprechend den Fig. 4 und 5 ergeben sich die Koordinaten der Abweichungen a' des Istverlaufs der Profillängsachse vom geraden Sollverlauf in den einzelnen Querschnittsflächen Q₁, Q₂ und Q₃ zu a'₁ (x'₁ = x'₀₁ - x'₀, y₁), a'₂(x'₂ = x'₀₂ - x'₀, y₂) und a'₃ (x'₃ = x'₀₃ - x'₀, y₃).

Der größenmäßige Unterschied zwischen den in unterschiedlichen Drehstellungen des Profils 7 gemessenen Abweichungen aᵢ und a'ᵢ in den einzelnen Querschnittsflächen Qᵢ bei der Erfassung des Istverlaufs 13 der Profillängsachse beruht auf der gewichtsbedingten Biegemomentbelastung des in den unterschiedlichen Drehstellungen momentfrei gehaltenen Profils 7. Bei Profilquerschnitten mit übereinstimmenden Flächenträgheitsmomenten bezüglich der Hauptachsen ist die gewichtsbedingte Biegung in jeder Drehstellung des Profils gleich, sodass aus den erfassten Messdaten in wenigstens zwei unterschiedlichen Drehstellungen des Profils 7 der gewichtsbedingte Anteil der Abweichungen a der Istverläufe 13 vom geraden Sollverlauf 11 in den beiden Drehstellungen rechnerisch eliminiert werden kann. Dies bedeutet, dass die geometrische Istabweichung des unbelasteten Profils 7 in den einzelnen Querschnittsflächen Qi ermittelt werden kann, ohne den Profilquerschnitt oder die mechanischen Eigenschaften des Profils 7 zu kennen.

Bei Profilquerschnitten mit unterschiedlichen Hauptträgheitsmomenten bewegen sich die Umrisspunkte 16, 17 bei einer Drehung des Profils 7 nicht auf einer Kreisbahn, weil sich in unterschiedlichen Richtungen unterschiedliche Trägheitsmomente ergeben, was unterschiedliche, gewichtsbedingte Durchbiegungen bedingt. Um bei solchen Profilen 7 nicht auf die Kenntnis der Hauptträgheitsmomente beziehungsweise deren Verhältnis und damit auf die Querschnittsform angewiesen zu sein, können die Lagekoordinaten der Umrisspunkte 16, 17 des Profils 7 in den verschiedenen Querschnittsflächen Qᵢ in Drehstellungen des Profils 7 erfasst werden, die sich durch bestimmte, ausgewählte Drehwinkel unterscheiden, weil die gewichtsbedingte Verformung der Profile 7 auch bei einer entsprechenden gegenseitigen Bezugnahme der Lagekoordinaten der Umrisspunkte rechnerisch eliminiert werden kann, wenn diese Lagekoordinaten in Drehalgen des Profils 7 erfasst werden, die sich durch bestimmte Winkelschritte unterscheiden. Besonders einfache Messverhältnisse ergeben sich in diesem Zusammenhang bei um 180° gegeneinander versetzten Drehlagen, die sich unabhängig von dem Verhältnis der Hauptträgheitsmomente durch eine übereinstimmende gewichtsbedingte Verformung der Profile 7 auszeichnen.

Die Verlagerung der Umrisspunkte 16, 17 bei einer Profildrehung um 180° kann bei den üblichen Messeinrichtungen dazu führen, dass die zu erfassenden Umrisspunkte 16, 17 bei der Profildrehung aus dem Erfassungsbereich der Messeinrichtung bewegt werden. In einem solchen Fall können die Drehschritte zwischen den einzelnen Drehalgen des Profils 7 45° betragen, was allerdings die Lagekoordinatenerfassung in drei sich je um 45° voneinander unterscheidenden Drehlagen erfordert, um die Verformung aufgrund des Eigengewichts rechnerisch eliminieren zu können.

Die Auswerteeinrichtungen können getrennt von der Vorrichtung vorgesehen sein. Nach der Fig. 1 ist die Auswerteeinrichtung 19 jedoch als Teil der Messeinrichtung mit dem Messkopf 10 zu einer Baueinheit zusammengefasst.

Werden nicht die Lagekoordinaten von Umrisspunkten 16, 17 entlang von je einer Koordinatenachse zugeordneten Konturlinien des Profils 7 erfasst, sondern beispielsweise der Verlauf einer Profilkante als Profilerzeugende gemessen, so ergeben sich in den einzelnen Querschnittsflächen Qi die durch die Profilkante bestimmten Umrisspunkte als Eckpunkte des Profilquerschnitts, sodass mithilfe der Lagekoordinaten dieser Eckpunkte in x- und y-Richtung der Istverlauf der Profillängsachse in der oben beschriebenen Weise in zumindest zwei Drehstellungen des Profils 7 erfasst und daraus die geometrische Lageabweichung der Profilachse von einem geraden Sollverlauf ermittelt werden kann.

## Patentansprüche

1. Verfahren zur Messung der Abweichungen (a) einer Längsachse eines Profils (7) von einem geraden Sollverlauf (11) mit einem das Profil (7) aufnehmenden Gestell (1) und einer im Gestell (1) vorgesehenen Messeinrichtung zur Lagekoordinatenerfassung von Umrisspunkten (16, 17) des Profils (7), wobei aus den Lagekoordinaten von gegeneinander winkelversetzten Umrisspunkten (16, 17) einzelner über die Profillänge verteilter Querschnittsflächen (Q) die Abweichungen (a) des Istverlaufs (13) der Längsachse des Profils (7) vom geraden Sollverlauf (11) in einer Auswerteeinrichtung (19) ermittelt werden, **dadurch gekennzeichnet, dass** zunächst eine durch zwei einander entsprechende, in voneinander beabstandeten Querschnittsflächen (12) liegende Umrisspunkte (16) gehende Bezugsgerade (18) festgelegt wird, wobei sich in den einzelnen Querschnittsflächen (Q) Bezugspunkte (P) als Schnittpunkte der Bezugsgeraden (18) mit der jeweiligen Querschnittsfläche (Q) ergeben, dass dann in einem Messdurchgang die Lagekoordinaten der auf einer gemeinsamen Profilerzeugenden (14, 15) liegenden Umrisspunkte (16, 17) in den einzelnen Querschnittsflächen (Q) erfasst werden, bevor der Messdurchgang nach einer Drehverstellung des Profils (7) wiederholt wird, das in zwei drehverstellbaren Aufnahmen (5) drehfest, aber momentfrei gelagert ist, und dass in der Auswerteeinrichtung (19) aus den auf die Bezugspunkte (P) bezogenen Lagekoordinaten der in wenigstens zwei Drehstellungen des Profils (7) erfassten Umrisspunkte (16, 17) die Abweichungen (a) vom geraden Sollverlauf (11) des Profils (7) ermittelt werden.

2. Verfahren nach Anspruch 1, **dadurch gekennzeichnet, dass** die Messeinrichtung wenigstens einen entlang des Profils (7) verlagerbaren Messkopf (10) aufweist, der je Messdurchgang von Querschnittsfläche (Q) zu Querschnittsfläche (Q) verfahren wird und nacheinander die Lagekoordinaten der Umrisspunkte (16, 17) in den einzelnen Querschnittsebenen (Q) erfasst.

3. Verfahren nach Anspruch 1 oder 2, **dadurch gekennzeichnet, dass** das Profil (7) um 180° gedreht wird, bevor der Messdurchgang wiederholt wird.

4. Verfahren nach Anspruch 1 oder 2, **dadurch gekennzeichnet, dass** das Profil (7) zwischen drei Messdurchgängen jeweils um 45° gedreht wird.

## Claims

1. Method for measuring the deviations (a) of a longitudinal axis of a profile (7) from a straight nominal course (11), with a frame (1) receiving the profile (7) and a measuring device provided in the frame (1) for acquiring position coordinates of contour points (16, 17) of the profile (7), wherein, from the position coordinates of contour points (16, 17) angularly offset from one another in individual cross-sectional surfaces (Q) distributed over the profile length, the deviations (a) of the actual course (13) of the longitudinal axis of the profile (7) from the straight nominal course (11) are determined in an evaluation device (19), **characterised in that** first a straight reference line (18) passing through two corresponding contour points (16) located in cross-sectional surfaces (12) spaced apart from one another is defined, wherein, in the individual cross-sectional surfaces (Q), reference points (P) result as intersection points of the straight reference line (18) with the respective cross-sectional surface (Q), **in that**, in a measurement pass, the position coordinates of the contour points (16, 17) lying on a common profile generatrix (14, 15) are then acquired in the individual cross-sectional surfaces (Q), before the measurement pass is repeated after a rotational adjustment of the profile (7), which is mounted in a rotationally fixed but moment-free manner in two rotationally adjustable mounts (5), and **in that**, in the evaluation device (19), the deviations (a) from the straight nominal course (11) of the profile (7) are determined from the position coordinates, referenced to the reference points (P), of the contour points (16, 17) acquired in at least two rotational positions of the profile (7).

2. Method according to claim 1, **characterised in that** the measuring device comprises at least one measuring head (10) displaceable along the profile (7), which, in each measurement pass, is moved from cross-sectional surface (Q) to cross-sectional surface (Q) and successively acquires the position coordinates of the contour points (16, 17) in the individual cross-sectional planes (Q).

3. Method according to claim 1 or 2, **characterised in that** the profile (7) is rotated by 180° before the measurement pass is repeated.

4. Method according to claim 1 or 2, **characterised in that** the profile (7) is rotated by 45° in each case between three measurement passes.

## Revendications

1. Procédé de mesure des écarts (a) d'un axe longitudinal d'un profilé (7) par rapport à une trajectoire de consigne droite (11), comprenant un bâti (1) recevant le profilé (7) et un dispositif de mesure prévu dans le bâti (1) pour la détection des coordonnées de position de points de contour (16, 17) du profilé (7), les écarts (a) de la trajectoire réelle (13) de l'axe longitudinal du profilé (7) par rapport à la trajectoire de consigne droite (11) étant déterminés dans un dispositif d'évaluation (19) à partir des coordonnées de position de points de contour (16, 17) décalés angulairement les uns par rapport aux autres appartenant à des sections transversales (Q) individuelles réparties sur la longueur du profilé (7), **caractérisé en ce qu'**on définit d'abord une droite de référence (18) passant par deux points de contour (16) correspondants situés dans des sections transversales (12) espacées l'une de l'autre, des points de référence (P) étant alors obtenus dans les différentes sections transversales (Q) comme points d'intersection de la droite de référence (18) avec la surface de section transversale respective (Q), puis, au cours d'une procédure de mesure, les coordonnées de position des points de contour (16, 17) situés sur une génératrice commune du profil (14, 15) dans chacune des sections transversales (Q) sont enregistrées, avant que la procédure de mesure soit répétée après un réglage en rotation du profilé (7), lequel est monté de manière solidaire en rotation, mais sans couple dans deux supports (5) réglables en rotation, et **en ce que**, dans le dispositif d'évaluation (19), les écarts (a) par rapport à la trajectoire de consigne droite (11) du profilé (7) sont déterminés à partir des coordonnées de position, rapportées aux points de référence (P), des points de contour (16, 17) enregistrés dans au moins deux positions de rotation du profilé (7).

2. Procédé selon la revendication 1, **caractérisé en ce que** le dispositif de mesure comporte au moins une tête de mesure (10) déplaçable le long du profilé (7), qui est déplacée à chaque passage de mesure d'une section transversale (Q) à une autre section transversale (Q) et qui enregistre successivement les coordonnées de position des points de contour (16, 17) dans les différents plans de section transversale (Q).

3. Procédé selon la revendication 1 ou 2, **caractérisé en ce que** le profilé (7) est tourné de 180° avant que le passage de mesure ne soit répété.

4. Procédé selon la revendication 1 ou 2, **caractérisé en ce que** le profilé (7) est tourné de 45° entre chaque passage de mesure.
